(19) Europäisches Patentamt
European Patent Office
Office européen des brevets

(11) Veröffentlichungsnummer: **0 087 709**
**A1**

(12) # EUROPÄISCHE PATENTANMELDUNG

(21) Anmeldenummer: 83101630.8

(22) Anmeldetag: 21.02.83

(51) Int.Cl.³: **C 07 C 87/50**
C 07 C 87/64, C 07 C 93/14
C 09 B 33/18

(30) Priorität: 24.02.82 DE 3206545

(43) Veröffentlichungstag der Anmeldung: 07.09.83 Patentblatt 83/36

(84) Benannte Vertragsstaaten: CH DE FR GB IT LI

(71) Anmelder: HOECHST AKTIENGESELLSCHAFT
Postfach 80 03 20
D-6230 Frankfurt am Main 80(DE)

(72) Erfinder: Mohr, Reinhard, Dr.
Rohrstrasse 34
D-6050 Offenbach/Main(DE)

(72) Erfinder: Hohmann, Kurt
Am Forsthaus Gravenbruch 55
D-6078 Neu-Isenburg(DE)

(54) **N,N',N"-Triaryl-1,2-3-triamino-propan-Verbindungen, Verfahren zu ihrer Herstellung und ihre Verwendung als Zwischenprodukte.**

(57) Triarylamino-propan-Verbindungen entsprechend der allgemeinen Formel (1)

```
         R                          R
         |                          |
Ar  -  N  -  CH²  -  CH₂  -  CH₂  -  N  -  Ar        (1)
                      |
               R   -  N  -  Ar
```

in welcher R, zueinander gleich oder voneinander verschieden, für Wasserstoff, Alkyl, von 1 bis 6 C-Atomen, das durch einen gegebenenfalls substituierten Arylrest substituiert sein kann, oder für Cyclopentyl oder Cyclohexyl steht und Ar, zueinander gleich oder voneinander verschieden, einen gegebenenfalls substituierten Arylrest bedeutet.

Diese Triarylamino-propan-Verbindungen lassen sich beispielsweise durch Kondensation des Arylamins mit Glycerin in Gegenwart von Phosphorsäure oder phosphoriger Säure oder Ester dieser Säuren herstellen.

Die Triarylamino-propan-Verbindungen können beispielsweise als Kupplungskomponenten zur Herstellung von Azofarbstoffen dienen.

EP 0 087 709 A1

HOECHST AKTIENGESELLSCHAFT HOE 82/F 031 Dr.ST

N,N',N"-Triaryl-1,2,3-triamino-propan-Verbindungen, Verfahren zu ihrer Herstellung und ihre Verwendung als Zwischenprodukte

Die Erfindung liegt auf dem technischen Gebiet von als Zwischenprodukte dienenden Arylaminoverbindungen, die bevorzugt als Kupplungskomponenten bei der Herstellung von Azoverbindungen, wie Azofarbstoffen, eingesetzt werden können.

Aus den deutschen Offenlegungsschriften Nrs. 26 06 363 und 29 51 400 ist bekannt, Arylamino-alkyl-Verbindungen durch Umsetzung von entsprechenden Hydroxy- und Aminoverbindungen, wie Phenolen, N-Hydroxyalkyl-arylaminen oder Alkanolen mit aliphatischen Aminen oder Arylaminen, herzustellen, wobei man als Katalysator Phosphorsäure verwendet.

Es wurden nunmehr neue N,N',N"-Triaryl-1,2,3-triamino-propan-Verbindungen gefunden, die die allgemeine Formel (1)

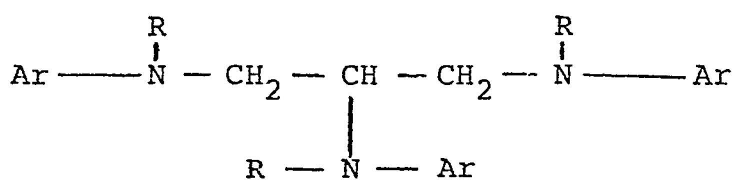

(1)

besitzen. In dieser Formel (1) können die drei Formelglieder R zueinander gleiche oder voneinander verschiedene Bedeutungen besitzen, haben jedoch bevorzugt die gleiche Bedeutung, und jedes R steht für ein Wasserstoffatom, eine Alkylgruppe von 1 bis 6 C-Atomen, bevorzugt von 1 bis 4 C-Atomen, insbesondere die Methylgruppe, wobei die Alkylgruppe noch durch einen gegebenenfalls substituierten Arylrest nachstehender Bedeutung substituiert sein kann, oder ist die Cyclopentyl- oder Cyclohexylgruppe, die beide,

insbesondere die letztgenannte, durch 1 bis 3 Methylgruppen substituiert sein können; in dieser Formel (1) können die drei Formelglieder Ar ebenfalls zueinander gleiche oder voneinander verschiedene Bedeutungen besitzen, haben jedoch bevorzugt die gleiche Bedeutung, und jedes Ar steht für einen gegebenenfalls substituierten Arylrest nachstehender Bedeutung.

Arylreste sind der Phenylrest, der 1-Naphthylrest und der 2-Naphthylrest. Sofern diese Arylreste substituiert sind, sind die Substituenten Alkylgruppen von 1 bis 4 C-Atomen, wie die Methyl- oder Äthylgruppe, Alkoxygruppen von 1 bis 4 C-Atomen, wie die Methoxygruppe und die Äthoxygruppe, die Phenoxygruppe, Halogenatome, wie Chlor- und Bromatome, die Trifluormethylgruppe, Acylaminogruppen einer Alkancarbonsäure von 2 bis 5 C-Atomen oder einer gegebenenfalls, bspw. durch Chlor, Methyl, Äthyl, Methoxy, Äthoxy und/oder Sulfamoyl, substituierten Benzoesäure, die Carbonsäuregruppe, die Cyanogruppe, eine Dialkylaminogruppe mit Alkylgruppen von 1 bis 4 C-Atomen, die Sulfamoyl- und Carbamoylgruppe oder Sulfamoyl- und Carbamoylgruppen, die durch Alkylgruppen von 1 bis 4 C-Atomen, Benzyl-, Phenäthyl-, Phenyl-, durch Chlor, Methyl, Äthyl, Methoxy und/oder Äthoxy substituierte Phenyl- und Cyclohexylgruppen mono- oder disubstituiert sind.

Von den erfindungsgemäßen Triarylamino-propan-Verbindungen der allgemeinen Formel (1) sind diejenigen bevorzugt, in denen das Formelglied R jeweils ein Wasserstoffatom oder eine Alkylgruppe von 1 bis 4 C-Atomen, wie beispielsweise die Methyl-, Äthyl-, n-Propyl-, iso-Propyl-, n-Butyl-, iso-Butyl- und sek.Butyl-Gruppe, insbesondere die Methyl-, Äthyl- und n-Propylgruppe, oder die Cyclohexyl-, Phenäthyl- oder Benzylgruppe bedeutet und Ar der Phenylrest ist, der durch 1, 2 oder 3, bevorzugt einen oder zwei, Substituenten aus der Gruppe Alkyl von 1 bis 4 C-Atomen, wie insbesondere Methyl und Äthyl, Alkoxy von 1 bis 4 C-Atomen, wie insbesondere Methoxy und Äthoxy, und Halogen, wie Brom und insbesondere Chlor, substituiert sein kann, oder den 1- oder 2-Naphthylrest bedeutet, die beide durch einen oder zwei Substituenten aus der Gruppe Alkyl von 1 bis 4 C-Atomen, bevorzugt Methyl, Alkoxy von 1 bis 4 C-Atomen, bevorzugt Methoxy und Äthoxy, und Halogen, bevorzugt Chlor, substituiert sein können.

Besonders bevorzugt sind diejenigen erfindungsgemäßen Triarylamino-propan-Verbindungen, in welchen jedes Aryl, gleich oder verschieden, bevorzugt gleich, für einen 1-oder 2-Naphthyl- und insbesondere für den Phenylrest steht, wobei diese Arylreste durch 1, 2 oder 3 Substituenten aus der Gruppe Halogen, wie Brom und bevorzugt Chlor, Methyl, Äthyl, Methoxy, Äthoxy und Phenoxy substituiert sein können, und weiterhin diejenigen, in denen jedes R, gleich oder verschieden, bevorzugt gleich, ein Wasserstoffatom, die Methyl-, Äthyl-, n-Propyl-, iso-Propyl-, n-Butyl-, iso-Butyl-, Cyclohexyl-, Benzyl- oder Phenäthyl-Gruppe bedeutet.

Von den erfindungsgemäßen Triarylamino-propan-Verbindungen, insbesondere von den vorstehend bevorzugt genannten erfindungsgemäßen Verbindungen, können insbesondere diejenigen hervorgehoben werden, in denen R für die Äthylgruppe und insbesondere für die Methylgruppe oder für ein Wasserstoffatom steht und jedes R die gleiche Bedeutung besitzt.

Die Formelglieder Ar sind beispielsweise die bereits erwähnte Phenyl-, 1-Naphthyl- und 2-Naphthylgruppe, weiterhin die 2-Methylphenyl-, 3-Methylphenyl-, 4-Methylphenyl-, 2-Chlorphenyl-, 3-Chlorphenyl-, 4-Chlorphenyl-, 2-Methoxyphenyl-, 3-Methoxyphenyl-, 4-Methoxyphenyl-, 2-Äthoxyphenyl-, 3-Äthoxyphenyl-, 2,3-Dimethylphenyl-, 2,4-Dimethylphenyl-, 2,5-Dimethylphenyl-, 2,6-Dimethylphenyl, 2,3-Dichlorphenyl-, 2,4-Dichlorphenyl-, 2,5-Dichlorphenyl-, 2,6-Dichlorphenyl-, 3,4-Dichlorphenyl-, 2,5-Dimethoxyphenyl-, 3-Chlor-2-methylphenyl-, 4-Chlor-2-methylphenyl-, 5-Chlor-2-methylphenyl- und 6-Chlor-2-methylphenyl-Gruppe.

Von den Formelresten Ar-N(R)— der allgemeinen Formel (1) sind insbesondere diejenigen bevorzugt, in denen die para-Stellung zu der Aminogruppe —N(R)— unsubstituiert ist.

Solche bevorzugten Formelreste sind beispielsweise der Anilino-, N-Methyl-anilino-, N-Äthyl-anilino-, N-Propylanilino-, N-Isopropyl-anilino-, N-n-Butyl-anilino-, N-Iso-butyl-anilino-, N-sek.Butyl-anilino-, N-Cyclohexyl-anilino-, N-Benzyl-anilino-, 2-Methylanilino-, 3-Methylanilino-, 2-Chloranilino-, 3-Chloranilino-, 2-Methoxyanilino-, 2-Äthoxyanilino-, 3-Methoxyanilino-, 3-Äthoxyanilino-, 2,3-Dimethylanilino-, 2,5-Dimethylanilino-, 2,6-Dimethylanilino-, 2,3-Dichloranilino-, 2,5-Dichloranilino-, 2,6-Dichloranilino-, 2,5-Dimethoxyanilino-, 3-Chlor-2-methyl-anilino-, 5-Chlor-2-methyl-anilino-, 6-Chlor-2-methyl-anilino-, N-Methyl-2-methyl-anilino-, N-Methyl-3-methyl-anilino-, N-Äthyl-2-methyl-anilino-, N-Äthyl-3-methyl-anilino-, 2-Äthylanilino-, 3-Äthylanilino-, N-Methyl-3-chloranilino-, N-Äthyl-3-chloranilino-, 1-Naphthylamino- und 1-Naphthyl-(N-äthyl)-amino-Rest, ebenso auch der 2-Naphthylamino- und 2-Naphthyl-(N-äthyl)-amino-Rest, insbesondere die Anilino-, N-Methyl-anilino-, N-Äthyl-anilino-, 2-Methylanilino-, 2-Methoxyanilino-, 2-Äthylanilino-, 2-Chloranilino-, 3-Methylanilino-, 3-Methoxyanilino-, 3-Chloranilino-, 2,5-Dimethylanilino-, 2,5-Dimethoxyanilino-, N-Methyl-3-methylanilino-, N-Äthyl-3-methyl-anilino- und N-Methyl-3-chloranilino-Reste sowie die 1-Naphthylamino- und 1-Naphthyl-N-äthylamino-Reste.

Die vorliegende Erfindung betrifft weiterhin Verfahren zur Herstellung dieser obengenannten und definierten Triarylamino-propan-Verbindungen der allgemeinen Formel (1). Sie sind dadurch gekennzeichnet, daß man 1,2,3-Trihydroxy-propan(Glycerin) der allgemeinen Formel (2)

$$HO-CH_2-\underset{\displaystyle OH}{\underset{|}{CH}}-CH_2-OH \qquad (2)$$

mit einem Arylamin oder einem Gemisch von 2 oder 3 Arylaminen entsprechend der allgemeinen Formel (3)

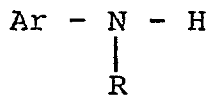 (3)

in welcher Ar und R die obengenannten Bedeutungen haben, in insgesamt dreifach molarer Menge in Gegenwart einer phosphorhaltigen Verbindung entsprechend der allgemeinen Formel (4a) oder (4b)

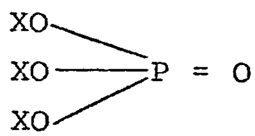

(4a)

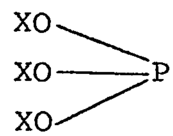

(4b)

in welcher X ein Wasserstoffatom, ein Alkalimetallatom, vorzugsweise Natrium und Kalium, eine Alkylgruppe von 1 bis 5 C-Atomen, die durch einen Arylrest substituiert sein kann, oder einen gegebenenfalls substituierten Arylrest bedeutet, oder einem Gemisch derselben unter Abspaltung von Wasser bei erhöhter Temperatur umsetzt.

Phosphorhaltige Verbindungen entsprechend den obigen allgemeinen Formeln (4a) und (4b) sind beispielsweise Phosphorsäure oder phosphorige Säure sowie deren sauren und neutralen Alkyl-, Aralkyl- und Arylester. Die Umsetzung erfolgt im allgemeinen bei einer Temperatur zwischen 140 und 250°C, bevorzugt zwischen 150 und 210°C, insbesondere zwischen 170 und 200°C, und insbesondere vorteilhaft zwischen 180 und 190°C. Bevorzugt wird das Arylamin der allgemeinen Formel (3) in einem geringen Überschuß, bezogen auf die eingesetzte dreifach molare Menge, in den Reaktionsansatz eingesetzt.

Die neuen Verbindungen der allgemeinen Formel (1) können auch erfindungsgemäß in der Weise hergestellt werden, daß man Glycerin (der allgemeinen Formel (2)) mit einer Verbindung der allgemeinen Formel (3) oder einem Gemisch von zwei Verbindungen der allgemeinen Formel (3) zunächst in

insgesamt einfach molarer oder insgesamt zweifach molarer Menge zu einer Verbindung der allgemeinen Formel (5) oder (6)

$$\mathrm{Ar}-\underset{\substack{|\\ \mathrm{R}}}{\mathrm{N}}-\mathrm{CH_2}-\underset{\substack{|\\ \mathrm{OH}}}{\mathrm{CH}}-\mathrm{CH_2}-\mathrm{OH} \qquad (5)$$

$$\mathrm{Ar}-\underset{\substack{|\\ \mathrm{R}}}{\mathrm{N}}-\mathrm{CH_2}-\underset{\substack{|\\ \mathrm{OH}}}{\mathrm{CH}}-\mathrm{CH_2}-\underset{\substack{|\\ \mathrm{R}}}{\mathrm{N}}-\mathrm{Ar} \qquad (6)$$

in welchen Ar und R die obengenannten Bedeutungen haben, bzw. einem Gemisch derselben, unter Verwendung von phosphorhaltigen Verbindungen der allgemeinen Formeln (4a) oder (4b) oder einem Gemisch derselben bei erhöhter Temperatur umsetzt und diese Verbindungen der Formeln (5) und/oder (6), gegebenenfalls nach Zwischenisolierung, mit einem weiteren Amin der allgemeinen Formel (3) in zweifach molarer Menge bzw. einfach molarer Menge umsetzt, - wobei die in den verschiedenen Stufen eingesetzten Arylamine der allgemeinen Formel (3) gleich oder voneinander verschieden sein können.

Die phosphorhaltigen Verbindungen (4a) und (4b) können im Überschuß, d.h. mehr als der äquimolaren Menge, im allgemeinen jedoch in katalytischen Mengen in den Reaktionsansatz eingesetzt werden, so beispielsweise in einer Menge von 0,001 bis etwa 0,5 Mol, bezogen auf 1 Mol Glycerin.

Bevorzugt verwendet man 0,01 bis 0,3 Mol der phosphorhaltigen Verbindungen (4a) und (4b), bezogen auf 1 Mol eingesetztes Glycerin. Die optimale Menge an den phosphorhaltigen Verbindungen läßt sich im Einzelfall leicht experimentell bestimmen.

Die Reaktionszeiten zur Erzielung zufriedenstellender Umsetzungsgrade betragen etwa 10 bis 25 Stunden; die Ausbeuten liegen im allgemeinen bei etwa 80 bis 95 % der Theorie, bezogen auf die eingesetzte Menge an Glycerin.

In der Regel wird ein Überschuß an dem Arylamin der allgemeinen Formel (3) eingesetzt, um eine möglichst vollständige Umsetzung zu gewährleisten. Dieses Arylamin kann in der Regel leicht durch Wasserdampfdestillation aus dem Reaktionsgemisch abgetrennt werden; ein Überschuß an dem Arylamin empfiehlt sich schon deshalb, weil während der erfindungsgemäßen Umsetzung ein Teil des oft wasserdampfflüchtigen Arylamins der allgemeinen Formel (3) mit dem bei der Kondensationsreaktion freiwerdenden Wasser aus dem Reaktionsansatz abdestilliert.

Das erfindungsgemäße Verfahren wird beispielsweise so ausgeführt, daß man zunächst Glycerin und das Arylamin der allgemeinen Formel (3) in äquivalenten Mengen, d.h. im Molverhältnis von 1:3, ggf. mit einem Überschuß an dem Arylamin der Formel (3) von bis zu 10 %, vermischt, die phosphorhaltige Verbindung der allgemeinen Formel (4a) und/oder (4b) zugibt, das Reaktionsgemisch auf eine Temperatur von etwa 150°C bis zur beginnenden Wasserabscheidung erhitzt und sodann die Umsetzung nach weiterem Erhitzen bei einer Temperatur zwischen 170 und 200°C, vorzugsweise 180 bis 190°C, zu Ende führt. Anschließend unterwirft man den Reaktionsansatz einer Wasserdampfdestillation, um nicht umgesetztes oder überschüssiges Arylamin der Formel (3) abzutrennen. Aus der zurückbleibenden wäßrigen Phase

wird das Umsetzungsprodukt abgetrennt, mit Wasser mehrmals gewaschen, filtriert und nach üblichen Methoden gereinigt, so beispielsweise durch Destillation unter reduziertem Druck oder durch Umkristallisation in geeigneten Lösungsmitteln, wie beispielsweise einem Alkanol von 1 bis 5 C-Atomen, wie insbesondere Äthanol, oder aus heißem Wasser.

In dem erfindungsgemäßen Verfahren zur Herstellung der neuen N,N',N"-Triaryl-1,2,3-triamino-propan-Verbindungen können die Ausgangsverbindungen entsprechend den allgemeinen Formeln (2), (3), (4a) und (4b) in handelsüblichen Qualitäten eingesetzt werden.
So setzt man beispielsweise das Glycerin entweder in Form der destillierten Ware als praktisch wasserfreies, etwa 99 gew.-%iges Handelsprodukt ein oder man verwendet das ebenfalls handelsübliche etwa 85 bis 87 gew.-%ige wasserhaltige Glycerin, das den Vorteil einer geringeren Viskosität und damit einer besseren Handhabung hat.
Die als Ausgangsverbindungen dienenden Arylamine der allgemeinen Formel (3) sind bei Raumtemperatur flüssige oder feste Verbindungen und können in dieser Form in die Reaktion eingesetzt werden. In manchen Fällen mag es günstig sein, feste Arylamine zuvor aufzuschmelzen und in flüssiger Form dem Reaktionsgefäß zuzufügen. Von den obengenannten Arylaminen der allgemeinen Formel (3), die für das erfindungsgemäße Verfahren als Ausgangsverbindungen dienen, können insbesondere die folgenden primären und sekundären Aminobenzol- und Aminonaphthalin-Verbindungen genannt werden: Anilin, N-Methyl-anilin, N-Äthyl-anilin, N-Propyl-anilin, N-Isopropyl-anilin, N-n-Butyl-anilin, N-Isobutyl-anilin, N-sek.Butyl-anilin, N-Cyclohexyl-anilin, N-Benzyl-anilin, 2-Methylanilin, 3-Methylanilin, 4-Methylanilin, 2-Chloranilin, 3-Chloranilin, 4-Chloranilin, 2-Methoxyanilin, 2-Äthoxyanilin, 3-Methoxyanilin, 3-Äthoxyanilin, 4-Methoxyanilin, 4-Äthoxyanilin, 2,3-Dimethylanilin, 2,4-Dimethylanilin, 2,5-Dimethylanilin, 2,6-Dimethylanilin, 2,3-Dichloranilin, 2,4-Dichloranilin, 2,5-Dichloranilin, 2,6-Dichloranilin, 3,4-Dichloranilin, 2,5-Dimethoxyanilin, 3-Chlor-2-methyl-anilin, 4-Chlor-2-methyl-anilin, 5-Chlor-2-methyl-anilin, 6-Chlor-2-methyl-anilin, N-Methyl-2-methyl-anilin, N-Methyl-3-methyl-anilin, N-Äthyl-2-methyl-anilin, N-Äthyl-3-methyl-anilin, 2-Äthylanilin, 3-Äthylanilin, 4-Äthylanilin, N-Methyl-3-chloranilin, N-Äthyl-3-chloranilin, 1-Aminonaphthalin, 2-Aminonaphthalin, 1-(Äthylamino)-naphthalin und 2-(Äthylamino)-naphthalin.

Von den phosphorhaltigen Verbindungen entsprechend den allgemeinen Formeln (4a) und (4b) sind bevorzugt die Phosphorsäuren und phosphorige Säure zu nennen, die als besonders preisgünstige Handelsprodukte zur Verfügung stehen. Sie können entweder als 100 gew.-%ige Produkte oder in Form ihrer wäßrigen Lösungen oder, die Phosphorsäuren betreffend, als Polyphosphorsäure eingesetzt werden. Ebenso ist aber auch die Verwendung von schwerflüchtigen bzw. hochsiedenden Phosphorsäureestern oder Phosphorigsäureestern vorteilhaft, insbesondere dann, wenn man den Fortlauf des erfindungsgemäßen Verfahrens durch die sehr leichte und verfahrensmäßig günstige Methode der Bestimmung der Menge des abgespaltenen und während der Reaktion abdestillierten Wassers verfolgen und kontrollieren will. Hingegen spielt die Flüchtigkeit dieser Ester keine Rolle, falls man das erfindungsgemäße Verfahren unter Druck in einem geschlossenen Gefäß, gegebenenfalls in einem der nachgenannten Lösemittel, durchführt.

Von den erfindungsgemäß verwendbaren Esterverbindungen entsprechend den allgemeinen Formeln (4a) und (4b) können beispielsweise insbesondere die folgenden genannt werden: Tri-isobutyl-phosphat, Tri-n-butyl-phosphat, Di-n-butyl-phosphat, Dibenzyl-phosphat, Triphenylphosphat, Tritolylphosphat, Trikresyl-phosphat, Distearyl-phosphat, Di-dodecyl-phosphat, Di-isopropyl-phosphat, Tri-n-butyl-phosphit, Tribenzyl-phosphit, Dibutyl-phosphit, Di-isopropyl-phosphit, Dibenzyl-phosphit, Dioctylphosphit, Di-dodecyl-phosphit, Triphenyl-phosphit, Triäthyl-phosphit, Tritolyl-phosphit, Trixylyl-phosphit, Trinaphthyl-phosphit und Diphenyl-phosphit.

Das erfindungsgemäße Verfahren kann ohne Verwendung eines Löse- oder Verdünnungsmittels oder in einem Löse- oder Verdünnungsmittel durchgeführt werden. Solche sind beispielsweise Wasser, das jedoch nur in geringen Mengen beispielsweise mit dem Glycerin eingesetzt wird, insbesondere jedoch organische, gegenüber den Reaktionsbedingungen inerte Lösemittel, vorzugsweise die üblichen aromatischen und höhermolekularen gesättigten Kohlenwasserstoffe, wie beispielsweise Toluol, Äthylbenzol, die Xylole oder Gemische davon, Heptan, Nonan, o-Cymol, m-Cymol, p-Cymol, Benzinfraktionen mit einem Siedepunkt zwischen 70 und 190°C, Dibutyläther und Benzol.

Die erfindungsgemäße Umsetzung von Glycerin mit den Arylaminen der allgemeinen Formel (3) unter der katalytischen Wirkung der phosphorhaltigen Verbindungen entsprechend den allgemeinen Formeln (4a) und (4b) zu den Triarylaminopropan-Verbindungen der allgemeinen Formel (1) ist neu und überraschend. Denn es ist zwar bekannt, daß man primäre oder sekundäre Amine mit hydroxygruppenhaltigen Verbindungen zu den entsprechenden substituierten Aminoverbindungen unter der katalytischen Wirkung von phosphorhaltigen Verbindungen kondensieren kann (vgl. die bereits oben teils erwähnten deutschen Offenlegungsschriften Nrs. 25 49 957, 26 06 363, 27 14 255, 29 00 193 und 29 51 400), jedoch weiß man andererseits beispielsweise aus Chem. Ber. 37, 3757 (1940), daß Glycerin und Phosphorsäure bereits bei 135 bis 140°C Glycerinphosphorsäureester bilden und daß

bei einer Temperatur von 125°C aus Glycerin und phosphoriger Säure die entsprechenden Glycerin-phosphorigsäureester entstehen (Compt. rend. 133, 643 u. 882 (1901)); ebenfalls ist aber auch aus J. prakt. Chem. [2] 79, 354 (1909), bekannt, daß Glycerin beim Erhitzen mit Phosphorsäure auf 180 bis 190°C unter Wasserabspaltung Acrolein bildet, weiterhin, daß Glycerin mit Arylaminen unter der Katalyse von anderen Säuren Ringschlußreaktionen zu heterocyclischen Verbindungen eingeht (so entsteht bei der Skraup'schen Chinolinsynthese aus Anilin, Glycerin und Schwefelsäure bei 140°C als erstes Reaktionsprodukt Dihydrochinolin – vgl. Organikum, Deutscher Verlag der Wissenschaften, Berlin (1968), Seite 494). Ebenso wird aus Chem. Ber. 16, 710 (1929), berichtet, daß beim Erhitzen eines Gemisches aus Anilin, Glycerin und Zinkchlorid auf 160 bis 170°C Skatol entsteht, und aus Chemiker-Zeitung 60, 703 (1904), ist bekannt, daß beim Erhitzen von Anilin-hydrochlorid mit Glycerin auf 215°C das 2-(4'-Aminophenyl)-chinolin gebildet wird.

Es war demnach überraschend, daß *) Umsetzung von Glycerin mit den Triarylaminen der allgemeinen Formel (3) in Gegenwart der phosphorhaltigen Verbindungen der allgemeinen Formeln (4a) und (4b) die erfindungsgemäßen Arylaminopropan-Verbindungen entsprechend der allgemeinen Formel (1) in hoher Ausbeute und ohne Verunreinigung durch eines der in der Literatur genannten Reaktionsprodukte erhalten werden. *)bei der

Die neuen N,N',N"-Triaryl-1,2,3-triamino-propan-Verbindungen der allgemeinen Formel (1) sind, je nach Konstitution, gut kristallisierte, farblose Verbindungen oder auch Pasten oder Öle, die teilweise nach längerem Stehen glasartig erstarren. In aromatischen Kohlenwasserstoffen, wie Toluol oder Chlorbenzol, sind sie meist gut löslich; aus Alkoholen können sie teilweise, gegebenenfalls in Mischung mit Wasser, umkristallisiert werden.

Die neuen Triarylamino-propane der allgemeinen Formel (1) sind wertvolle Zwischenprodukte, die insbesondere als Kupplungskomponenten zur Herstellung von Azoverbindungen, wie Azofarbstoffen, dienen können. Sofern sie als Kupplungskomponenten eingesetzt werden, darf die para-Stellung des Arylrestes Ar zur Aminogruppe nicht substituiert sein. Zur Herstellung von Azoverbindungen werden diese ankuppelbaren Arylaminopropane der allgemeinen Formel (1) in an und für sich üblicher Weise mit Diazoniumsalzen umgesetzt, wobei man je nach Wahl der Diazokomponente und auch der Kupplungskomponente der allgemeinen Formel (1) wasserunlösliche oder wasserlösliche, saure oder basische Azofarbstoffe erhalten kann.

Arylaminopropan-Verbindungen der allgemeinen Formel (1), die bevorzugt als Kupplungskomponenten verwendet werden können, sind deshalb bevorzugt solche, in denen der Arylrest Ar keine Substituenten in p-Stellung zur Aminogruppe trägt. Solche erfindungsgemäßen Arylaminopropane sind insbesondere bevorzugt diejenigen Verbindungen der Formel (1), in welchen der Formelrest Ar-N(R)- den Anilino-, den N-Methyl-anilino-, den N-Äthyl-anilino-, 2-Methyl-anilino-, 2-Methoxy-anilino-, 2-Äthylanilino-, 2-Chloranilino-, 3-Methylanilino-, 3-Methoxyanilino-, 3-Chloranilino-, 2,5-Dimethylanilino-, 2,5-Dimethoxyanilino-, N-Methyl-3-methylanilino-, N-Äthyl-3-methylanilino-, N-Methyl-3-chloranilino-, 1-Naphthylamino- und 1-Naphthyl-(N-äthyl)-amino-Rest bedeutet.

Die nachstehenden Beispiele dienen zur Erläuterung der Erfindung. Die Teile sind Gewichtsteile und die Prozentangaben stellen Gewichtsprozente dar, sofern nicht anders vermerkt. Volumenteile verhalten sich zu Gewichtsteilen wie Liter zu Kilogramm.

Beispiel 1

106 Teile 87 %iges Glycerin, 420 Teile 2-Chloranilin und 20 Teile phosphorige Säure werden gemischt und im Verlauf von zwei Stunden unter Rühren auf 180 bis 190°C erhitzt. Bei etwa 150°C beginnt sich Wasser in der Destillationsvorlage abzuscheiden. Man hält die Temperatur für etwa 15 Stunden auf 180 bis 190°C; danach haben sich in der Vorlage etwa 61 Volumenteile Wasser und 10 Volumenteile 2-Chloranilin abgeschieden. Eine Probe aus dem Reaktionsansatz läßt dünnschichtchromatographisch erkennen, daß neben etwas 2-Chloranilin ein Hauptreaktionsprodukt und in geringen Mengen zwei Nebenprodukte enthalten sind. Man kühlt den Ansatz auf 80°C ab, gibt 200 Teile Wasser hinzu und stellt mit 40 Teilen einer wäßrigen 33 %igen Natronlauge deutlich alkalisch. Man destilliert sodann nicht umgesetztes 2-Chloranilin mit Wasserdampf ab, trennt den pastösen Rückstand von der wäßrigen Phase ab und wäscht ihn dreimal mit etwa 500 Teilen Wasser, bis das Waschwasser fast neutral ist.

Es werden 380 Teile eines halbfesten Rückstandes erhalten, der in 1000 Volumenteilen Äthanol warm gelöst und mit Kieselgur und Tierkohle geklärt wird. Das Filtrat wird bei etwa 60°C unter Rühren mit Wasser in kleinen Portionen versetzt, bis sich ein kristalliner Niederschlag auszuscheiden beginnt. Man rührt nach Abkühlen noch eine Weile weiter und saugt den in hellen Kristallen ausgefallenen Niederschlag ab, wäscht ihn mit ganz wenig kaltem Äthanol und trocknet ihn.

Ausbeute: 280 Teile (farblose Kristalle); Smp.: 69-71°C (dünnschichtchromatographisch fast einheitlich).

Eine Probe wird nochmals aus 85 %igem Äthanol umgelöst: farblose Kristalle mit Smp. 71-74°C (DC-einheitlich).

Analyse:

| | | | | | | |
|---|---|---|---|---|---|---|
| ber. | C | 59,92 % | gef. | C | 60,1 % | 59,8 % |
| | H | 4,76 % | | H | 4,8 % | 4,8 % |
| | N | 9,99 % | | N | 9,8 % | 9,7 % |
| | Cl | 25,33 % | | Cl | 24,9 % | 24,8 % |
| | O | 0 % | | O | $<$0,3 % | $<$0,3 %. |

Massenspektrographie: Molmasse 420.

Das Syntheseprodukt ist, wie durch die Analysen bestätigt, das N,N',N"-Tri-(2'-chlorphenyl)-1,2,3-triamino-propan der Formel

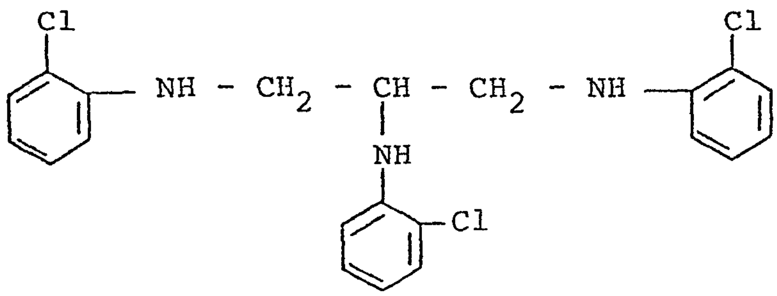

<u>Beispiel 2</u>

Eine Mischung aus 106 Teilen 87 %igem Glycerin, 420 Teilen 2-Chloranilin und 20 Teilen 85 %iger Phosphorsäure werden bei einer Temperatur zwischen 180 bis 190°C 20 Stunden gerührt. Es werden hierbei 68 Volumenteile Wasser und 12 Volumenteile 2-Chloranilin in der Destillationsvorlage abgeschieden.

Der Syntheseansatz wird sodann gemäß der Verfahrensweise des Beispieles 1 aufgearbeitet. Man erhält das N,N',N"-Tri-(2'-chlorphenyl)-1,2,3-triamino-propan in einer Ausbeute von 375 Teilen mit Smp. von 69-71°C.

<u>Beispiel 3</u>

92 Teile 99 %iges Glycerin, 420 Teile 2-Chloranilin und 20 Teile Triphenylphosphit werden gemischt und 15 Stunden bei einer Temperatur von 180 bis 190°C gerührt. Es scheiden sich hierbei 46 Volumenteile Wasser und 12 Volumenteile 2-Chlor-anilin in der Vorlage ab.

Man arbeitet den Syntheseansatz gemäß der Verfahrensweise des Beispieles 1 auf und erhält 382 Teile des N,N',N"-Tri-(2'-chlorphenyl)-1,2,3-triamino-propans in farblosen Kristallen mit einem Smp. von 70-71°C.

Beispiel 4

Man rührt eine Mischung von 92 Teilen 99 %igem Glycerin, 420 Teilen 2-Chloranilin und 20 Teilen Tri-isobutyl-phosphat 25 Stunden bei einer Temperatur von 180 bis 190°C. In der Vorlage scheiden sich 42 Volumenteile Wasser und 15 Volumenteile 2-Chloranilin ab.

Der Syntheseansatz wird gemäß der Verfahrensweise des Beispieles 1 aufgearbeitet; man erhält 298 Teile N,N',N"-Tri-(2'-chlorphenyl)-1,2,3-triamino-propan in farblosen Kristallen mit einem Smp. von 69-72°C.

Beispiel 5

Eine Mischung aus 92 Teilen 99 %igem Glycerin, 385 Teilen 2-Chloranilin und 20 Teilen Triäthylphosphit werden in einem Druckgefäß während 25 Stunden bei 185 bis 195°C erhitzt. Sodann kühlt man den Ansatz auf 80°C ab und arbeitet ihn gemäß der Verfahrensweise des Beispieles 1 durch alkalische Wasserdampfdestillation auf.

Es werden 280 Teile N,N',N"-Tri-(2'-chlorphenyl)-1,2,3-triamino-propan mit einem Smp. von 70-73°C erhalten.

Beispiel 6

Eine Mischung aus 106 Teilen 87 %igem Glycerin, 490 Teilen 2,5-Dichloranilin und 25 Teilen phosphoriger Säure werden im Verlauf von 2 Stunden auf 180 bis 190°C erhitzt. Bei 150°C beginnt die Wasserabscheidung, und nach 12stündigem Rühren bei 180 bis 190°C haben sich 54 Volumenteile Wasser und wenige Kristalle von 2,5-Dichloranilin in der Vorlage abgeschieden. Eine Probe aus dem Reaktionsansatz zeigt dünnschichtchromatographisch neben geringen Teilen 2,5-Dichloranilin das Hauptprodukt und zwei Nebenprodukte in geringen Mengen.

Man kühlt den Ansatz auf etwa 120°C ab und gießt die schwach bräunliche Reaktionsmasse, die bei weiterem Abkühlen

sehr zäh wird, auf ein Gemisch aus 300 Teilen Wasser und 40 Teilen 33 %ige Natronlauge und unterwirft das Ganze einer Wasserdampfdestillation, bis sich in der Vorlage keine Kristalle von 2,5-Dichloranilin mehr abscheiden. Der in der Hitze zähflüssige Rückstand wird mit warmem Wasser gewaschen, sodann in 1000 Volumenteilen Äthanol warm gelöst und mit Kieselgur und Tierkohle geklärt. Das warme Filtrat wird mit wenig Wasser versetzt, bis ein Niederschlag auszufallen beginnt; man läßt noch unter weiterem Rühren abkühlen. Es scheiden sich helle Kristalle in einer Ausbeute von 425 Teilen aus. Man kristallisiert aus einem Äthanol/Wasser-Gemisch von 8:2 um und erhält farblose Kristalle.

Smp. 123-124°C (DC-einheitlich).

Analyse:

| | | | | | | |
|---|---|---|---|---|---|---|
| ber. | C | 48,09 % | gef. | C | 47,9 % | 48,1 % |
| | H | 3,24 % | | H | 3,2 % | 3,3 % |
| | N | 8,02 % | | N | 8,1 % | 8,1 % |
| | Cl | 40,65 % | | Cl | 39,7 % | 39,9 % |
| | O | 0 % | | O | <0,3 % | <0,3 % . |

Massenspektrographie: Molmasse von 524.

Das Syntheseprodukt ist, wie durch die Analyse bestätigt, das N,N',N"-Tri-(2',5'-dichlorphenyl)-1,2,3-triamino-propan der Formel

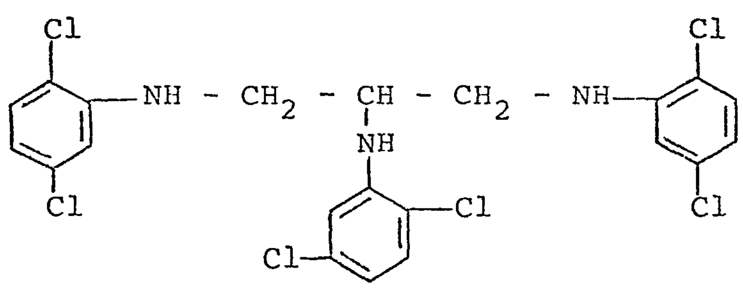

.

Beispiel 7

Ein Gemisch aus 106 Teilen 87 %igem Glycerin, 490 Teilen 2,5-Dichloranilin und 20 Teilen 85 %iger Phosphorsäure werden auf 180 bis 190°C erhitzt und 15 Stunden bei dieser Temperatur weitergerührt. In der Vorlage scheiden sich 57 Teile Wasser und 8 Teile 2,5-Dichloranilin ab.

Der Syntheseansatz wird gemäß der Verfahrensweise des Beispieles 6 aufgearbeitet. Man erhält 400 Teile N,N',N"-Tri-(2',5'-dichlorphenyl)-1,2,3-triamino-propan mit einem Smp. von 123°C.

Beispiel 8

Ein Gemisch aus 92 Teilen 99 %igem Glycerin, 490 Teilen 2,5-Dichloranilin und 20 Teilen Triphenylphosphit werden auf 180 bis 190°C erhitzt und 15 Stunden bei dieser Temperatur weitergerührt. In der Vorlage scheiden sich 46 Teile Wasser und 10 Teile 2,5-Dichloranilin ab.
Der Syntheseansatz wird gemäß der Verfahrensweise des Beispieles 6 aufgearbeitet. Es werden 430 Teile N,N',N"-Tri-(2',5'-dichlorphenyl)-1,2,3-triamino-propan mit einem Smp. von 123°C erhalten.

Beispiel 9

Ein Gemisch aus 106 Teilen 87 %igem Glycerin, 375 Teilen 2-Methoxyanilin und 30 Teilen phosphoriger Säure werden im Verlauf von 2 Stunden auf eine Temperatur von 180 bis 190°C erhitzt. Bei etwa 150°C beginnt sich Wasser abzuscheiden. Man hält die Reaktionstemperatur von 180 bis 190°C unter Rühren noch 12 Stunden; hierbei scheiden sich 66 Teile Wasser und etwa 10 Volumenteile 2-Methoxyanilin in der Vorlage ab. Eine Probe aus dem Ansatz ergibt dünnschichtchromatographisch, daß neben dem Hauptprodukt nur wenig 2-Methoxyanilin und in ganz geringer Menge einige Nebenprodukte enthalten sind.
Die auf 120°C abgekühlte Reaktionsmasse gießt man in ein

Gemisch aus 300 Teilen Wasser und 40 Teilen 33 %iger Natronlauge; überschüssiges 2-Methoxyanilin wird mit Wasserdampf abdestilliert. Der zähflüssige Destillationsrückstand wird dreimal mit warmem Wasser neutral gewaschen und sodann mit etwa 1000 Volumenteilen warmem Äthanol digeriert. Die Masse zerfällt zu hellen Kristallen, die abgesaugt und getrocknet werden.

Ausbeute: 300 Teile; Smp.: 106-111°C.

Eine Probe wird aus Aceton umkristallisiert: farblose Kristalle; Smp.: 118°C (DC-einheitlich).

Analyse:

| | | | | | | |
|---|---|---|---|---|---|---|
| ber. | C | 70,76 % | gef. | C | 70,2 % | 70,4 % |
| | H | 7,13 % | | H | 7,0 % | 7,1 % |
| | N | 10,32 % | | N | 10,5 % | 10,5 % |
| | O | 11,79 % | | O | 11,1 % | 11,6 %. |

Massenspektrographie: Molmasse von 407.

Das Syntheseprodukt ist, wie durch die Analysen bestätigt, das N,N',N"-Tri-(2'-methoxyphenyl)-1,2,3-triamino-propan der Formel

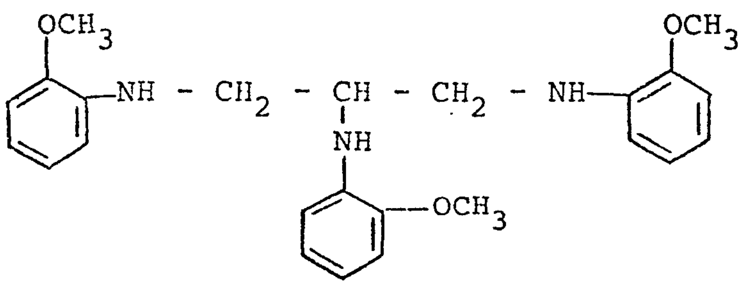

Beispiel 10

Ein Gemisch aus 106 Teilen 87 %igem Glycerin, 380 Teilen 2-Methoxyanilin und 20 Teilen 85 %iger wäßriger Phosphorsäure werden bei einer Temperatur zwischen 180 und 190°C 20 Stunden gerührt. 68 Teile Wasser und 12 Volumenteile 2-Methoxyanilin scheiden sich in der Vorlage ab.

Der Reaktionsansatz wird, wie im Beispiel 9 beschrieben, durch alkalische Wasserdampfdestillation aufgearbeitet. Man erhält 290 Teile N,N',N"-Tri-(2'-methoxyphenyl)-1,2,3-triamino-propan in Form eines Rohproduktes vom Smp. 110 bis 114°C; es ist ohne weitere Reinigung zur Weiterverarbeitung zu einem Endprodukt, beispielsweise zur Synthese eines Azofarbstoffes, brauchbar.

Beispiel 11

Man rührt ein Gemisch aus 92 Teilen 99 %igem Glycerin, 370 Teilen 2-Methoxyanilin und 20 Teilen Triphenylphosphit 20 Stunden bei 180 bis 190°C; 45 Teile Wasser und 12 Volumenteile 2-Methoxy-anilin gehen in die Vorlage über. Eine Probe aus dem Reaktionsansatz zeigt, daß nur noch wenig 2-Methoxyanilin enthalten ist. Neben dem Hauptprodukt sind nur einige geringe Teile von Verunreinigungen festzustellen.
Man arbeitet den Reaktionsansatz gemäß der Verfahrensweise des Beispieles 9 auf.
Ausbeute: 335 Teile N,N',N"-Tri-(2'-methoxyphenyl)-1,2,3-triamino-propan;
Smp.: 110 - 114°C (farblose Kristalle).

Beispiel 12

Man verfährt gemäß der Verfahrensweise des Beispieles 11, setzt jedoch anstelle des Triphenylphosphits 25 Teile Triisobutyl-phosphat ein.
Man erhält 300 Teile N,N',N"-Tri-(2'-methoxyphenyl)-1,2,3-triamino-propan in farblosen Kristallen vom Smp. 112°C.

Beispiel 13

Eine Mischung aus 680 Teilen N-Methyl-anilin, 212 Teilen 87 %igem Glycerin und 20 Teilen phosphoriger Säure wird im Verlaufe von zwei Stunden unter Rühren auf 180 bis 190°C erhitzt. Bei etwa 150°C beginnt die Wasserabscheidung. Man rührt noch 15 Stunden bei der Reaktionstemperatur von 180 bis 190°C weiter. Es scheiden sich 125 Volumenteile Wasser

und 40 Volumenteile N-Methyl-anilin in der Vorlage ab. Danach wird der Reaktionsansatz auf 80 bis 90°C abgekühlt, mit 100 Teilen Wasser versetzt und mit etwa 35 Teilen 33 %iger wäßriger Natronlauge schwach alkalisch gestellt. Überschüssiges N-Methyl-anilin und andere flüchtige Bestandteile werden mit Wasserdampf abdestilliert, die Wasserphase abgetrennt und das schwach gelbbraune Öl dreimal mit 500 Teilen heißem Wasser gewaschen.

Man erhält 603 Teile eines dickflüssigen Öls, das beim Stehen zäh pastös wird. Es besteht aus der Verbindung der Formel

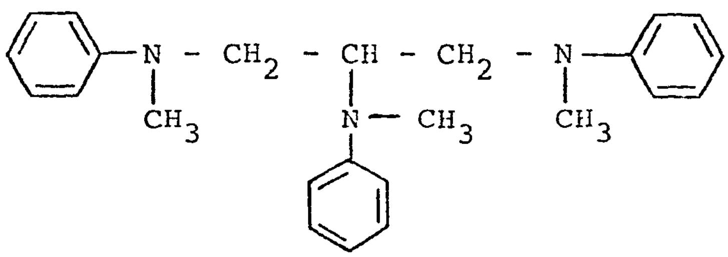

mit der chemischen Bezeichnung N,N',N"-Triphenyl-N,N',N"-trimethyl-1,2,3-triamino-propan; es ist nicht destillierbar und läßt sich nicht kristallisieren. Es ist in Äthanol, Aceton und Toluol löslich. Dünnschichtchromatographisch zeigt es zwei Nebenprodukte in sehr geringer Menge.

Beispiel 14

Man verfährt gemäß der Verfahrensweise des Beispieles 13, ersetzt jedoch die phosphorige Säure durch 40 Teile einer 85 %igen wäßrigen Phosphorsäure.

Man erhält 590 Teile des schwach verunreinigten N,N',N"-Triphenyl-N,N',N"-trimethyl-1,2,3-triamino-propans mit den in Beispiel 13 angegebenen Eigenschaften.

Beispiel 15

Man rührt ein Gemisch aus 680 Teilen N-Methyl-anilin, 185 Teilen 99 %igem Glycerin und 40 Teilen Triphenylphosphit 15 Stunden bei 180 bis 190°C. Im Verlauf der Reaktion werden 100 Teile Wasser und 40 Teile N-Methyl-anilin abgeschieden.
Man arbeitet den Reaktionsansatz gemäß der Verfahrensweise dieses Beispieles 13 auf. Es werden 600 Teile des schwach verunreinigten N,N',N"-Triphenyl-N,N',N"-trimethyl-1,2,3-triamino-propans erhalten.

Beispiel 16

Man verfährt gemäß der Verfahrensweise des Beispieles 13, ersetzt jedoch das Triphenylphosphit durch 40 Teile Triäthylphosphit oder 40 Teile Tri-isobutyl-phosphat. Man erhält die erfindungsgemäße Verbindung in etwa gleicher Ausbeute und Qualität.

Beispiel 17

Eine Mischung aus 212 Teilen 87 %igem Glycerin und 372 Teilen Anilin (entsprechend einem molaren Verhältnis von 1:2) sowie 20 Teilen phosphoriger Säure wird im Verlauf von 2 Stunden auf 180 bis 190°C erhitzt. Bei etwa 150°C beginnt die Abscheidung von Wasser in der Vorlage. Man rührt noch 15 Stunden bei der Reaktionstemperatur von 180 bis 190°C nach; es haben sich sodann 100 Teile Wasser und 5 Volumenteile Anilin in der Vorlage abgeschieden. Der Reaktionsansatz wird auf 80°C abgekühlt und mit 300 Teilen Wasser versetzt und sodann mit wäßriger Natronlauge schwach alkalisch gestellt. Nicht umgesetztes Anilin wird durch Wasserdampfdestillation abgetrennt. Man wäscht den zähflüssigen Destillationsrückstand dreimal mit 300 Teilen Wasser von etwa 50°C und läßt ihn anschließend erkalten.
Man erhält 355 Teile eines Produktes, das nach kurzer Zeit zu einer schwach bräunlichen Kristallmasse erstarrt. Sie wird zermahlen und sodann in 500 Volumenteilen Äthanol ausgerührt und abgesaugt. Man löst *) in Aceton, klärt mit Aktivkohle und engt das Filtrat langsam ein.
Man erhält fast farblose Kristalle mit einem Smp. von 132-136°C, der sich auch nach mehrmaligem Umkristallisieren aus Aceton nicht ändert. Dünnschichtchromatographisch

*) den Rückstand

erkennt man neben einem Hauptprodukt ein Nebenprodukt. Aus den gefundenen Analysenwerten:

N 9,4 % und 9,5 %

O 8,3 % und 8,5 %

kann man schließen, daß es sich um ein Gemisch aus 2 Kondensationsprodukten mit vermutlich den folgenden Formeln (A) und (B) handelt

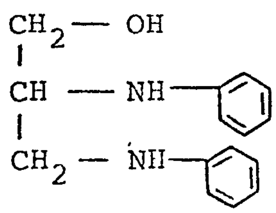

(A)

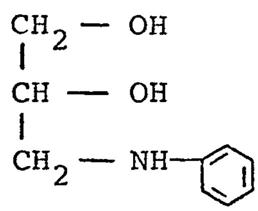

(B)

die als Vorprodukte zur Herstellung des erfindungsgemäßen Triphenylamino-propans dienen können.
Die Kristalle lösen sich in Essigsäure und sind ebenfalls kupplungsfähig. Beispielsweise lassen sie sich mit diazotiertem 2-Methoxy-4-nitroanilin zu einer Mischung aus zwei tiefroten Farbstoffen umsetzen.

Beispiele 18 bis 25

In den nachfolgenden Tabellenbeispielen sind weitere erfindungsgemäße Triarylamino-propan-Verbindungen entsprechend der allgemeinen Formel (1) beschrieben. Sie lassen sich in erfindungsgemäßer Weise, beispielsweise analog einem der obigen Ausführungsbeispiele, unter Verwendung von Glycerin und der etwa dreifach molaren Menge an dem in der Tabelle angegebenen Arylamin und in Gegenwart des in der Tabelle angegebenen phosphorhaltigen Katalysators entsprechend der allgemeinen Formeln (4a) und (4b) herstellen, wobei die Menge des phosphorhaltigen Katalysators in Gewichtsprozent, bezogen auf das eingesetzte Glycerin, angegeben ist. Die erfindungsgemäßen Verbindungen werden als dicke, zähe Öle oder Pasten erhalten, die teilweise nach längerem Stehen glasartig erstarren.

| Bsp. | Ausgangsverbindung der Formel (3) bzw. erfindungsgemäße Verbindung der Formel (1) R | Ar | Katalysator der Formel (4a) oder (4b) | Ausbeute (in % d.Th.) |
|---|---|---|---|---|
| 18 | Äthyl | Phenyl | Triphenylphosphit (11 %) | 83 % |
| 19 | Äthyl | 3-Methylphenyl | Triphenylphosphit (13 %) | 90 % |
| 20 | Wasserstoff | 3-Chlorphenyl | phosphorige Säure (11 %) | 92 % |
| 21 | Wasserstoff | 4-Methoxy-phenyl | 85%ige wäßr. Phosphorsäure (22 %) | 88 % |
| 22 | Wasserstoff | 4-Methylphenyl | phosphorige Säure (11 %) | 93 % |
| 23 | Wasserstoff | 2-Äthoxyphenyl | phosphorige Säure (11 %) | 85 % |
| 24 | Wasserstoff | 1-Naphthyl | phosphorige Säure (11 %) | 60 % |
| 25 | Wasserstoff | 2-Äthylphenyl | phosphorige Säure (11 %) | 75 % |

Anwendungsbeispiel 1

Man trägt bei einer Temperatur zwischen 25 und 35°C 16,8 Teile 3-Amino-1,2,4-triazol in ein Gemisch aus 90 Teilen Wasser und 66 Volumenteilen 96%iger Schwefelsäure ein, kühlt auf 0°C ab und gibt 90 Teile Eis hinzu. Man diazotiert unter langsamer Zugabe von 40 Volumenteilen einer wäßrigen 5n-Natriumnitritlösung.

Zu dieser Diazoniumsalzlösung gibt man bei einer Temperatur zwischen -5°C und +15°C eine Lösung aus 27 Teilen N,N',N"-Tri-(2'-methyl-phenyl)-1,2,3-triamino-propan in 100 Volumenteilen Eisessig hinzu; man rührt diesen Kupplungsansatz noch eine Stunde weiter und gießt ihn sodann in 2000 Teile Eiswasser, stellt mit 33 %iger wäßriger Natronlauge auf einen pH-Wert zwischen 4 und 5 ein, saugt den ausgefallenen Trisazofarbstoff ab und wäscht ihn mit Wasser nach. Er wird bei 60°C getrocknet; Ausbeute: 47 Teile.

Die 47 Teile dieses basischen Trisazofarbstoffes werden zusammen mit 54 Teilen Natriumbicarbonat in 200 Teilen Wasser suspendiert. Man gibt bei einer Temperatur zwischen 25 und 45°C langsam 105 Volumenteile Dimethylsulfat hinzu und rührt noch einige Zeit bei dieser Temperatur weiter, bis nach etwa einer Stunde die Quaternierungsreaktion beendet ist. Überschüssiges Dimethylsulfat wird anschließend durch Erhitzen des Ansatzes auf 60 bis 70°C und zwei- bis dreistündigem Rühren bei dieser Temperatur durch saure Hydrolyse bei dem sich einstellenden pH-Wert von etwa 1 zerstört. Anschließend wird der Syntheseansatz mit 150 Teilen Eisessig verdünnt und die entstandene Farbstofflösung bei 25°C filtriert. Das Filtrat wird mit 50%iger wäßriger Essigsäure auf 600 Teile aufgefüllt.

Die so erhaltene Lösung mit dem Farbstoff der Formel

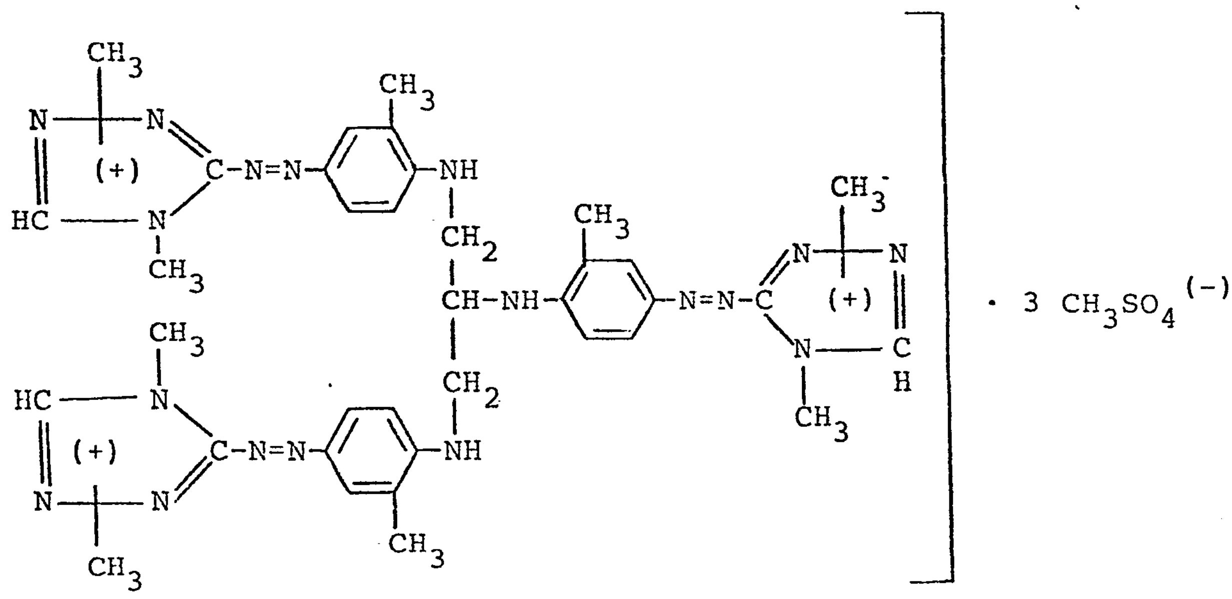

kann als Flüssigpräparation zum Färben von sauer-modifiziertem Polyacrylnitril eingesetzt werden. Dieser trisquartäre Farbstoff färbt sauer-modifizierte Polyacrylnitrilfasern im Gel- und Ausziehverfahren in roten Farbtönen mit sehr guten Licht- und Dämpfechtheiten; er zeichnet sich durch einen guten Farbaufbau und eine hohe Fixierung aus, so daß Streck-, Wasch- und Avivagebäder beim Gel-Färbeverfahren praktisch farblos bleiben. Er eignet sich weiterhin zum Färben von Papier; bedingt durch seine gute Fixierung sind die Abwässer farblos oder nur sehr schwach gefärbt.

Der oben beschriebene neue trisquartäre Trisazofarbstoff kann nach der sauren Hydrolyse des überschüssigen Dimethylsulfats auch in für quartäre Azofarbstoffe üblicher Weise, beispielsweise analog den nachfolgenden Anwendungsbeispielen, als Rhodanid- oder Tetrachlorzinksalz in fester Substanz isoliert werden.

Anwendungsbeispiel 2

Zur Herstellung eines neuen trisquartären Trisazofarbstoffes unter Verwendung eines erfindungsgemäßen Triarylaminopropans als Kupplungskomponente verfährt man in der im Anwendungsbeispiel 1 angegebenen Verfahrensweise, setzt jedoch anstelle des dort verwendeten Triaminopropans die äquivalente Menge an N,N',N"-Tri(2'-chlor-phenyl)-1,2,3-triamino-propan ein. Man erhält den quartären Farbstoff der Formel

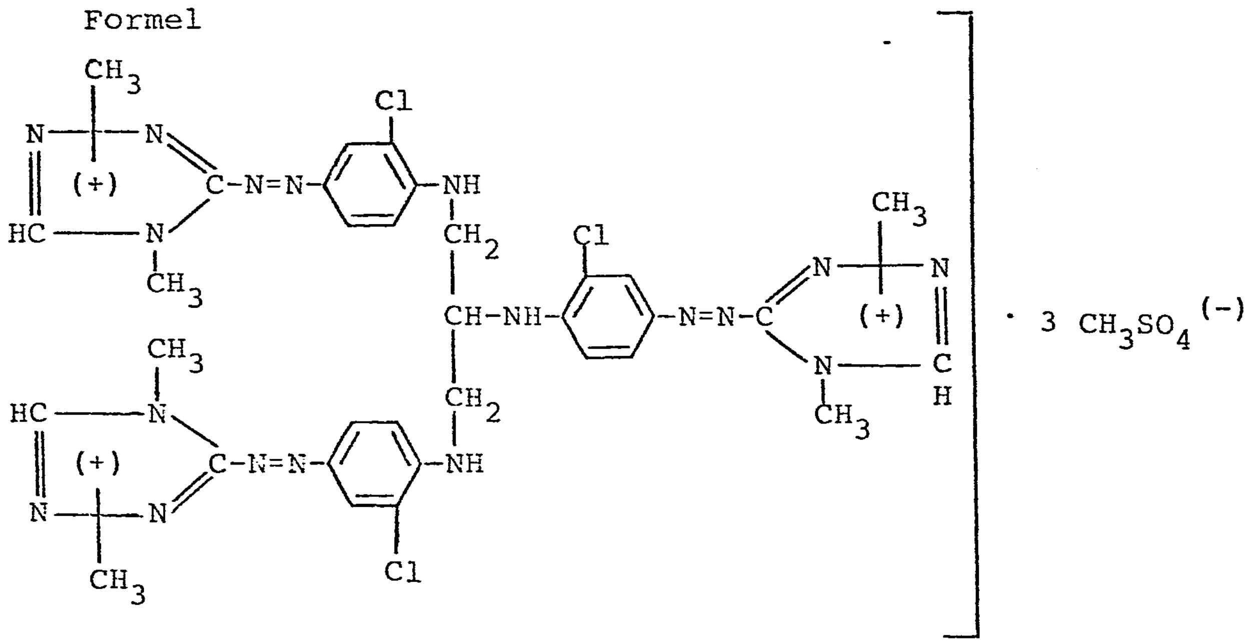

beispielsweise in Form der oben beschriebenen Flüssigpräparation.

Dieser trisquartäre Trisazofarbstoff besitzt ähnlich gute Farbstoffeigenschaften wie der des Anwendungsbeispieles 1

und färbt sauer modifizierte Polyacrylnitrilfasern in gelbstichig roten, echten Tönen.

Anwendungsbeispiel 3

16,8 Teile 3-Amino-1,2,4-triazol werden in der im Anwendungsbeispiel 1 angegebenen Weise diazotiert. Die Diazoniumsalzlösung wird in eine Lösung aus 27,5 Teilen N,N',N"-Trimethyl-N,N',N"-triphenyl-1,2,3-triamino-propan in 250 Teilen Wasser, 100 Teilen Eis, 30 Volumenteilen einer 96%igen Schwefelsäure und 5 Volumenteilen Eisessig unter Rühren einlaufen lassen. Nach einstündigem Nachrühren gibt man 500 Teile Eis hinzu und stellt den pH mittels 33%iger wäßriger Natronlauge auf einen Wert von 3,0. Den ausgefallenen Trisazofarbstoff isoliert und trocknet man; Ausbeute: 49 Teile.

Diese 49 Teile des Trisazofarbstoffes werden gemäß der Verfahrensweise des Anwendungsbeispieles 1 mittels Dimethylsulfat methyliert und quaterniert. Überschüssiges Dimethylsulfat wird in üblicher Weise durch Erhitzen des Ansatzes auf 60-70°C sauer hydrolysiert. Die Farbstofflösung wird sodann mit 1000 Teilen Wasser verdünnt und der trisquartäre Trisazofarbstoff bei 25-30°C durch langsames Eintragen von 20 Teilen Ammoniumthiocyanat gefällt. Nach Isolierung und Trocknung erhält man 48 Teile des Farbstoffes der Formel

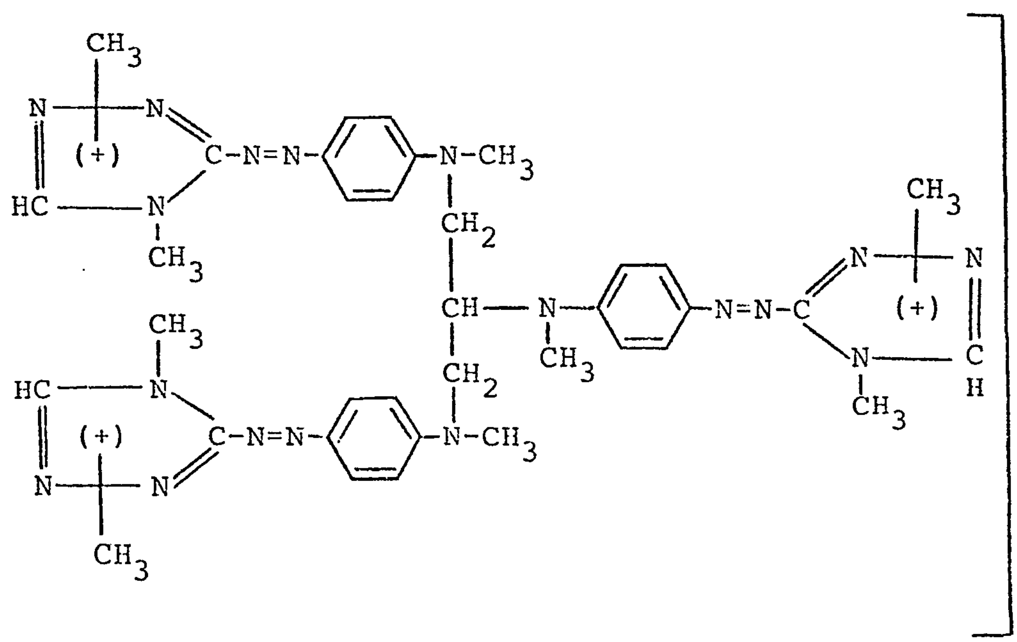

$\cdot\ 3\ SCN^{(-)}$

Dieses Rhodanidsalz des neuen trisquartären Trisazofarbstoffes besitzt eine sehr gute Löslichkeit in Dimethylformamid und Dimethylacetamid; es eignet sich deshalb sehr gut zur Herstellung von gefärbten, sauer-modifizierten Polyacrylnitrilfäden nach den üblichen Trocken- und Naßspinnfärbeverfahren. Es werden rotgefärbte Fäden mit hohem Glanz und sehr guten Wasser-, Wasch-, Schweiß-, Trockenreib- und Naßreibechtheiten sowie mit guter Lichtechtheit erhalten. Die Koagulations-, Streck- und Waschbäder werden nur sehr geringfügig angeblutet.

Anwendungsbeispiel 4

2-Amino-thiazol wird in bekannter Weise mit Nitrosylschwefelsäure diazotiert und anschließend mit der äquivalenten Menge an N,N',N"-Tri-(2'-methyl-phenyl)-1,2,3-triaminopropan, beispielsweise analog dem Anwendungsbeispiel 1, zum Trisazofarbstoff der Formel

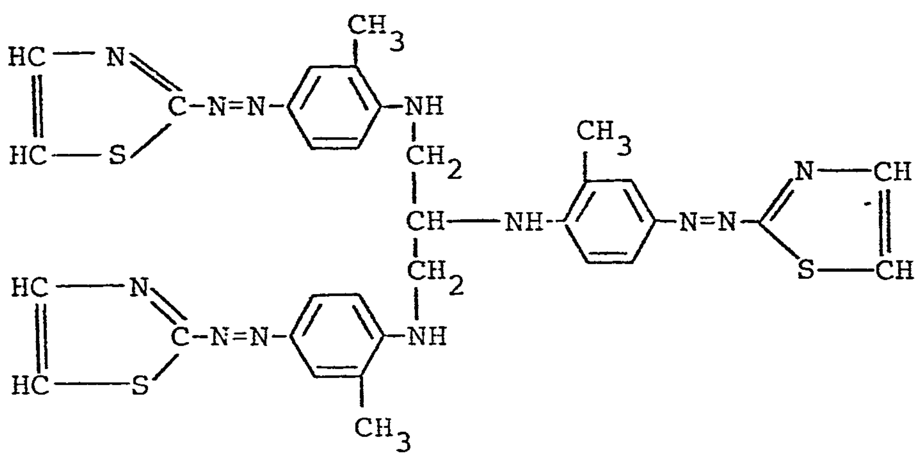

gekuppelt. 48,5 Teile dieses Trisazofarbstoffes und 8,2 Teile Magnesiumoxid werden in 200 Teilen Wasser suspendiert. Man gibt langsam bei einer Temperatur zwischen 30 und 50°C 60 Volumenteile Dimethylsulfat hinzu, rührt 1 bis 2 Stunden bei 45 bis 50°C nach und zerstört sodann überschüssiges Dimethylsulfat mittels saurer Hydrolyse durch Erhitzen auf 60 bis 65°C. Sodann gibt man zu dieser Farbstofflösung 300 Volumenteile Eisessig, filtriert diese Lösung bei 25 bis 30°C und versetzt das Filtrat mit 50%iger wäßriger

Essigsäure bis auf ein Gewicht von 750 Teilen. Man erhält auf diese Weise eine Flüssigpräparation des trisquartären Trisazofarbstoffes der Formel

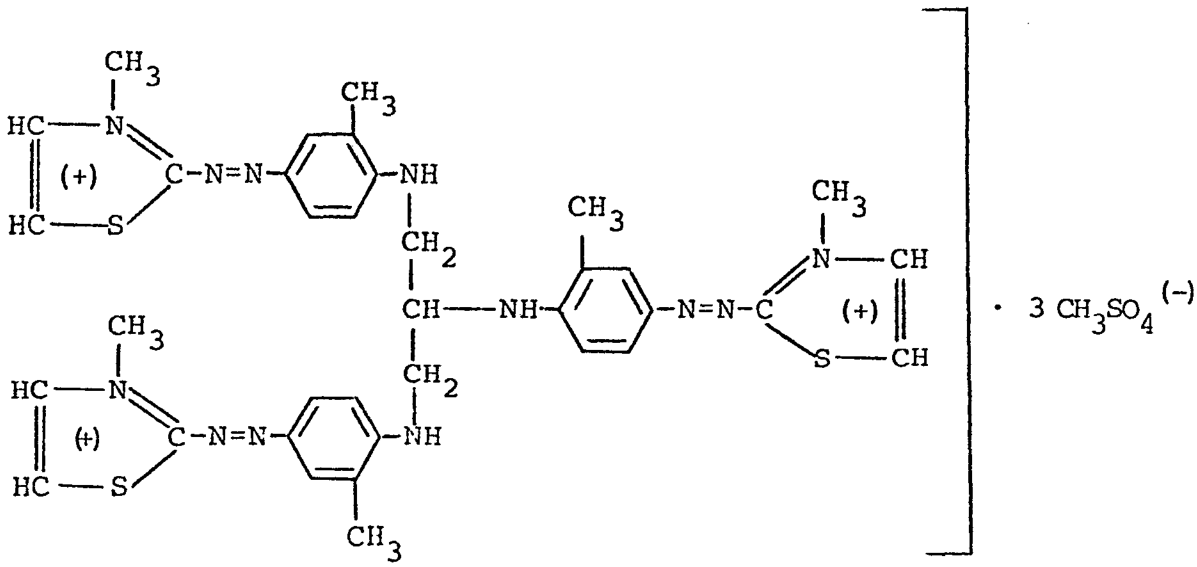

die zum Färben von sauer-modifizierten Polyacrylnitrilfasern im Gel- und Ausziehfärbeverfahren sowie von Papier eingesetzt werden kann. Der neue Farbstoff färbt die genannten Materialien in violetten Tönen; er zeichnet sich durch einen guten Farbaufbau und eine hohe Fixierung aus, so daß bei der Anwendung in der Spinnfärbung oder der Gelfärbung bei Polyacrylnitril die dort verwendeten Bäder praktisch farblos anfallen.

Anwendungsbeispiel 5

Eine Suspension von 18,5 Teilen 2-Chlor-4-amino-acetanilid und 7,6 Teilen Magnesiumoxid in 50 Teilen Wasser wird innerhalb von 30 Minuten bei einer Temperatur zwischen 50 und 60°C unter gutem Rühren mit 38,2 Volumenteilen Dimethylsulfat versetzt. Anschließend rührt man noch 2 Stunden bei etwa 60°C nach, verdünnt sodann mit 40 Teilen Wasser und klärt mit Kieselgur. Zu dem Filtrat werden 40 Volumenteile einer 32%igen wäßrigen Salzsäure gegeben, und dieser salzsaure Ansatz wird zur Abspaltung der Acetylgruppe unter Rückfluß 2 Stunden gekocht. Die Lösung wird sodann auf 0°C abgekühlt und mit 20 Volumenteilen einer wäßrigen 5n-Natriumnitritlösung diazotiert.

Diese Lösung des Diazoniumsalzes des 4-(Trimethylammonium)-2-chlor-anilins läßt man sodann in eine Lösung von 20°C aus 12,5 Teilen N,N',N"-Trimethyl-N,N',N"-triphenyl-1,2,3-triamino-propan in 300 Teilen Wasser und 40 Volumenteilen einer wäßrigen 5n-Salzsäure einlaufen. Man rührt noch eine Stunde nach und gibt sodann zur Ausfällung des Trisazofarbstoffes 35 Teile Natriumchlorid und 20 Volumenteile einer wäßrigen 64%igen Zinkchloridlösung hinzu. Das Kristallisat wird sodann abgesaugt, mit Wasser kurz gewaschen und getrocknet. Man erhält 41 Teile des Farbstoffes der Formel

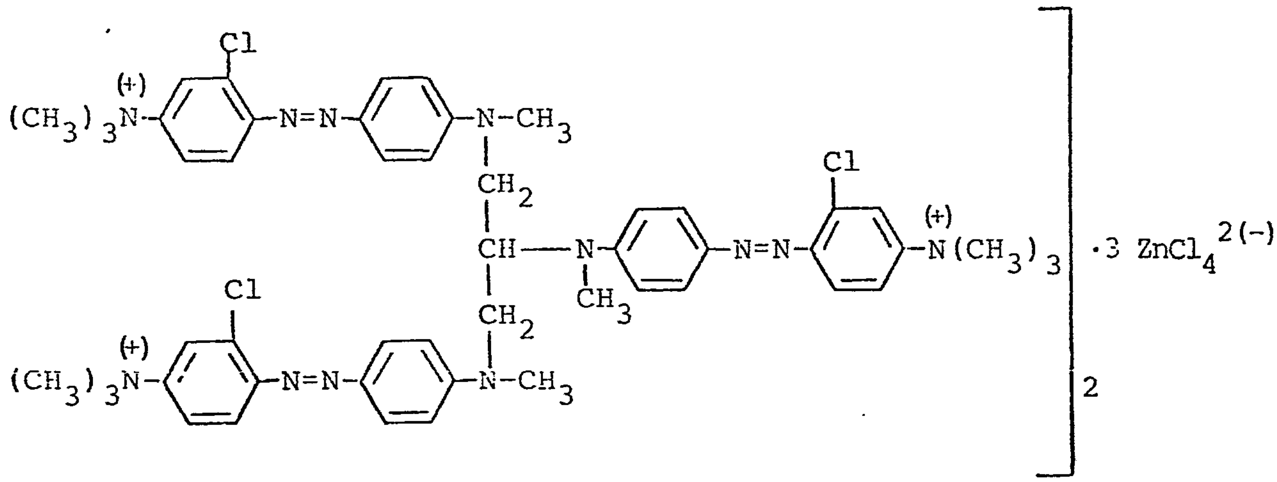

der Polyacrylnitrilfasermaterialien und Papier in goldgelben Tönen färbt. Dieser Farbstoff zeichnet sich durch seine guten coloristischen Eigenschaften, insbesondere durch seinen hohen Fixiergrad aus.

Anwendungsbeispiel 6

Man diazotiert in üblicher Weise 2-Methoxy-4-nitranilin und setzt es in dreifach molarer Menge mit der erfindungsgemäßen Verbindung des Beispieles 9 um, wobei diese erfindungsgemäße Verbindung in Form des Rohproduktes aus Beispiel 10 ohne vorherige Reinigung eingesetzt werden kann. Diese Kupplungsreaktion kann analog bekannten Umsetzungen von Diazoniumsalzen mit kupplungsfähigen Anilinen durchgeführt werden.

Man erhält einen tief bordofarbenen Trisazofarbstoff, der als Dispersionsfarbstoff Verwendung finden kann und beispielsweise Acetatseide in bordofarbenen Tönen färbt.

Anwendungsbeispiel 7

Man kuppelt das Diazoniumsalz des 2,5-Dichloranilins mit der Verbindung des Beispieles 9 bzw. Beispieles 10 und erhält einen orangefarbenen Trisazofarbstoff, der Acetatseide zu färben vermag.

Anwendungsbeispiel 8

Man diazotiert in üblicher Weise Anilin-2,4-disulfonsäure oder Anilin-2,5-disulfonsäure und setzt das Diazoniumsalz jeweils mit der erfindungsgemäßen Verbindung des Beispieles 9 bzw. Beispieles 10 in dreifach molarer Menge um. Man erhält saure Trisazofarbstoffe, die Wolle und Polyamid in gelbbraunen Tönen zu färben vermögen.

Patentansprüche:

1. N,N',N"-Triaryl-1,2,3-triamino-propan-Verbindungen der allgemeinen Formel (1)

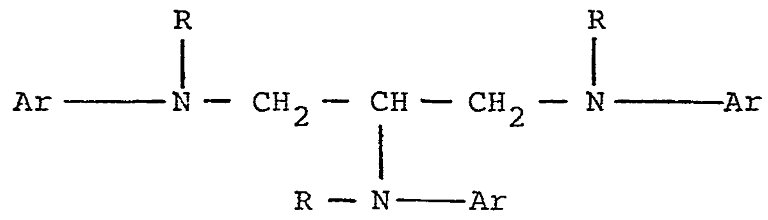

(1)

in welcher R, zueinander gleich oder voneinander verschieden, jedes ein Wasserstoffatom oder eine Alkylgruppe von 1 bis 6 C-Atomen, die durch einen Phenyl-, 1-Naphthyl- oder 2-Naphthylrest substituiert sein kann, bedeutet, wobei diese Phenyl- und Naphthylreste durch Substituenten aus der Gruppe {Alkyl von 1 bis 4 C-Atomen, Alkoxy von 1 bis 4 C-Atomen, Phenoxy, Halogen, Trifluormethyl, Acylamino einer Alkancarbonsäure von 2 bis 5 C-Atomen oder einer gegebenenfalls substituierten Benzoesäure, Carboxy, Cyano, Dialkylamino mit Alkyl von 1 bis 4 C-Atomen, Sulfamoyl, Carbamoyl, durch (Alkyl von 1 bis 4 C-Atomen, Benzyl, Phenäthyl, Phenyl, durch Chlor, Methyl, Äthyl, Methoxy und/oder Äthoxy substituiertes Phenyl und Cyclohexyl) mono- oder disubstituiertes Sulfamoyl und durch (Alkyl von 1 bis 4 C-Atomen, Benzyl, Phenäthyl, Phenyl, durch Chlor, Methyl, Äthyl, Methoxy und/oder Äthoxy substituiertes Phenyl und Cyclohexyl) mono- oder disubstituiertes Carbamoyl} substituiert sein können, oder R ist die Cyclopentyl- oder Cyclohexylgruppe, die beide durch 1 bis 3 Methylgruppen substituiert sein können, und in welcher Ar, zueinander gleich oder voneinander verschieden, jedes ein Phenyl-, 1-Naphthyl- oder 2-Naphthylrest ist, die durch Substituenten aus der Gruppe {Alkyl von 1 bis 4 C-Atomen, Alkoxy von 1 bis 4 C-Atomen, Phenoxy, Halogen, Trifluormethyl, Acylamino einer Alkancarbonsäure von 2 bis 5 C-Atomen oder einer gegebenenfalls substituierten Benzoesäure, Carboxy, Cyano, Dialkylamino

mit Alkyl von 1 bis 4 C-Atomen, Sulfamoyl, Carbamoyl, durch (Alkyl von 1 bis 4 C-Atomen, Benzyl, Phenäthyl, Phenyl, durch Chlor, Methyl, Äthyl, Methoxy und/oder Äthoxy substituiertes Phenyl und Cyclohexyl) mono- oder disubstituiertes Sulfamoyl und durch (Alkyl von 1 bis 4 C-Atomen, Benzyl, Phenäthyl, Phenyl, durch Chlor, Methyl, Äthyl, Methoxy und/oder Äthoxy substituiertes Phenyl und Cyclohexyl) mono- oder disubstituiertes Carbamoyl} substituiert sein können.

2. Verbindungen nach Anspruch 1, dadurch gekennzeichnet, daß R ein Wasserstoffatom oder eine Alkylgruppe von 1 bis 4 C-Atomen, eine Cyclohexyl-, Phenäthyl- oder Benzylgruppe ist.

3. Verbindungen nach Anspruch 1 oder 2, dadurch gekennzeichnet, daß Ar der Phenylrest ist, der durch 1, 2 oder 3 Substituenten aus der Gruppe Alkyl von 1 bis 4 C-Atomen, Alkoxy von 1 bis 4 C-Atomen und Halogen substituiert sein kann, oder den 1- oder 2-Naphthylrest bedeutet, die durch einen oder zwei Substituenten aus der Gruppe Alkyl von 1 bis 4 C-Atomen, Alkoxy von 1 bis 4 C-Atomen und Halogen substituiert sein können.

4. Verbindungen nach Anspruch 1, dadurch gekennzeichnet, daß R ein Wasserstoffatom oder die Methylgruppe bedeutet und Ar für den Phenylrest steht, der durch 1, 2 oder 3 Substituenten aus der Gruppe Halogen, Methyl, Äthyl, Methoxy, Äthoxy und Phenoxy substituiert sein kann.

5. Verbindungen nach einem der Ansprüche 1 bis 4, dadurch gekennzeichnet, daß im Formelglied Ar die p-Stellung zur Aminogruppe unsubstituiert ist.

6. Verbindungen nach einem der Ansprüche 1 bis 5, dadurch gekennzeichnet, daß die drei Formelglieder R zueinander die gleiche Bedeutung besitzen und ebenso die drei Formelglieder Ar zueinander die gleiche Bedeutung haben.

7. Verbindungen nach Anspruch 1, dadurch gekennzeichnet, daß der Formelrest Ar-N(R)— in Formel (1) der Anilino-, der N-Methyl-anilino-, N-Äthyl-anilino-, N-Propylanilino-, N-Isopropyl-anilino-, N-n-Butyl-anilino-, N-Isobutyl-anilino-, N-sek.Butyl-anilino-, N-Cyclohexyl-anilino-, N-Benzyl-anilino-, 2-Methyl-anilino-, 3-Methyl-anilino-, 2-Chloranilino-, 3-Chloranilino-, 2-Methoxyanilino-, 2-Äthoxyanilino-, 3-Methoxyanilino-, 3-Äthoxyanilino-, 2,3-Dimethylanilino-, 2,5-Dimethylanilino-, 2,6-Dimethylanilino-, 2,3-Dichloranilino-,

2,5-Dichloranilino-, 2,6-Dichloranilino-, 3,4-Dichloranilino-, 2,5-Dimethoxyanilino-, 3-Chlor-2-methyl-anilino-, 5-Chlor-2-methyl-anilino-, 6-Chlor-2-methyl-anilino-, N-Methyl-2-methyl-anilino-, N-Methyl-3-methyl-anilino-, N-Äthyl-2-methyl-anilino-, N-Äthyl-3-methyl-anilino-, 2-Äthylanilino-, 3-Äthylanilino-, N-Methyl-3-chloranilino-, N-Äthyl-3-chloranilino-, 1-Naphthylamino-, 2-Naphthylamino-, N-Äthyl-naphth-1-yl-amino- oder N-Äthyl-naphth-2-yl-amino-Gruppe bedeutet.

8. Verbindungen nach Anspruch 1, dadurch gekennzeichnet, daß der Formelrest Ar-N(R)— in Formel (1) eine Anilino-, N-Methyl-anilino-, N-Äthyl-anilino-, 2-Methyl-anilino-, 2-Methoxyanilino-, 2-Äthylanilino-, 2-Chloranilino-, 3-Methylanilino-, 3-Methoxyanilino-, 3-Chloranilino-, 2,5-Dimethylanilino-, 2,5-Dimethoxyanilino-, N-Methyl-3-methylanilino-, N-Äthyl-3-methylanilino-, N-Methyl-3-chloranilino-, 1-Naphthylamino- oder N-Äthyl-naphth-1-yl-amino-Gruppe ist.

9. Verfahren zur Herstellung der in Anspruch 1 genannten und definierten Verbindungen der allgemeinen Formel (1), dadurch gekennzeichnet, daß man Glycerin mit einem Arylamin oder einem Gemisch von 2 oder 3 Arylaminen entsprechend der allgemeinen Formel (3)

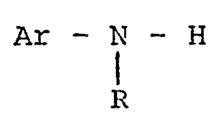

(3)

in welcher Ar und R die in Anspruch 1 genannten Bedeutungen haben, in insgesamt dreifach molarer Menge in Gegenwart einer phosphorhaltigen Verbindung entsprechend der allgemeinen Formel (4a) oder (4b)

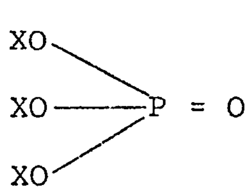

(4a)

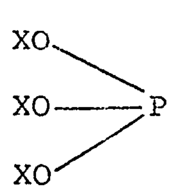

(4b)

in welchen X ein Wasserstoffatom, ein Alkalimetallatom, eine Alkylgruppe von 1 bis 5 C-Atomen, die durch einen Arylrest substituiert sein kann, oder einen gegebenenfalls substituierten Arylrest bedeutet, bei einer Temperatur von 140 bis 250°C umsetzt oder daß man Glycerin mit einer Verbindung der allgemeinen Formel (3) oder einem Gemisch von zwei Verbindungen der allgemeinen Formel (3) zunächst in insgesamt einfach molarer oder insgesamt zweifach molarer Menge zu einer Verbindung der allgemeinen Formel (5) oder (6)

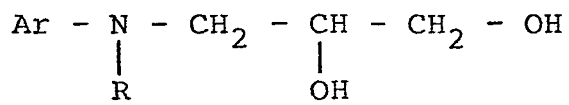 (5)

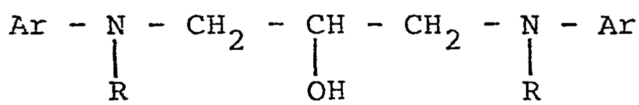 (6)

in welchen Ar und R die in Anspruch 1 genannten Bedeutungen haben, bzw. zu einem Gemisch derselben, in Gegenwart einer phosphorhaltigen Verbindung entsprechend den obengenannten und definierten allgemeinen Formeln (4a) und (4b) oder einem Gemisch derselben bei einer Temperatur zwischen 140 und 250°C umsetzt und diese Verbindungen der Formeln (5) und/oder (6), gegebenenfalls nach Zwischenisolierung, mit einem weiteren Amin der allgemeinen Formel (3) in zweifach bzw. einfach molarer Menge in Gegenwart einer Verbindung (4a) und/oder (4b) bei einer Temperatur zwischen 140 und 250°C umsetzt.

10. Verfahren nach Anspruch 9, dadurch gekennzeichnet, daß die Umsetzung bei einer Temperatur zwischen 170 und 200°C durchgeführt wird.

11. Verwendung der in Anspruch 1 genannten und definierten Verbindungen der allgemeinen Formel (1) zur Herstellung von Azoverbindungen.

Europäisches Patentamt

# EUROPÄISCHER RECHERCHENBERICHT

0087709

Nummer der Anmeldung

EP 83 10 1630

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 214 471 (D.H. CLEMENS)<br>* Ansprüche *<br>--- | 1 | C 07 C 87/50<br>C 07 C 87/64<br>C 07 C 93/14<br>C 09 B 33/20 |
| A | EP-A-0 038 296 (CIBA-GEIGY)<br>* Ansprüche *<br>--- | 1,11 | |
| D,A | EP-A-0 031 089 (HOECHST)<br>* Ansprüche; Seite 15, Zeilen 11-20 *<br>----- | 1,9-11 | |

| RECHERCHIERTE SACHGEBIETE (Int. Cl ³) |
|---|
| C 07 C 87/00<br>C 07 C 93/00<br>C 09 B 33/00 |

Der vorliegende Recherchenbericht wurde für alle Patentansprüche erstellt.

| Recherchenort | Abschlußdatum der Recherche | Prüfer |
|---|---|---|
| DEN HAAG | 19-05-1983 | MOREAU J.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82